(19) Europäisches Patentamt
European Patent Office
Office européen des brevets

(11) EP 2 487 036 B1

(12) **EUROPEAN PATENT SPECIFICATION**

(45) Date of publication and mention of the grant of the patent:
**23.08.2017 Bulletin 2017/34**

(21) Application number: **10822268.8**

(22) Date of filing: **08.10.2010**

(51) Int Cl.:
***B32B 27/36** (2006.01)*

(86) International application number:
**PCT/KR2010/006902**

(87) International publication number:
**WO 2011/043623 (14.04.2011 Gazette 2011/15)**

# (54) MULTILAYERED OPTICAL FILM, AND PREPARATION METHOD THEREOF

MEHRSCHICHTIGER OPTISCHER FILM UND HERSTELLUNGSVERFAHREN DAFÜR

FILM OPTIQUE MULTICOUCHE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2009 KR 20090096273**
**27.09.2010 KR 20100093448**

(43) Date of publication of application:
**15.08.2012 Bulletin 2012/33**

(73) Proprietor: **SKC Co., Ltd**
**Suwon-si, Gyeonggi-do 440-300 (KR)**

(72) Inventors:
- **JOO, Cheon Yong**
  **Seoul 156-825 (KR)**
- **PAK, Hyung Suk**
  **Hwaseong-si**
  **Gyeonggi-do 445-810 (KR)**
- **SON, Byoung Kuk**
  **Seoul 139-240 (KR)**
- **SHIN, Dae Yong**
  **Seoul 138-160 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-97/01440**
**WO-A2-99/36262**
**JP-A- H11 505 036**
**JP-A- 2002 521 730**
**JP-A- 2004 512 199**
**KR-A- 20070 030 760**
**KR-A- 20090 053 815**
**KR-B1- 100 560 342**
**KR-B1- 100 670 613**
**US-A1- 2006 084 780**
**US-A1- 2008 075 947**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 487 036 B1

## Description

## FIELD OF THE INVENTION

The present invention relates to a multilayered optical film which can be used for color filters, packaging materials, and the like.

## BACKGROUD OF THE INVENTION

Conventional multilayer films, as disclosed in US Patent No. 5,122,905 issued to Wheatley et al., are typically prepared by coextrusion of two or more polymers through a multilayer feedblock apparatus, followed by a drawing step. Recently, this multilayer technology has been widely practiced in various fields to prepare reflective polarizer films for enhancing brightness of a display and to prepare mirror films, color shifting films, color filters, etc.

Polyester-based materials are most frequently used due to their high birefringence. For instance, polyethylene terephthalate (PET) and polyethylene naphthalate (PEN) are widely used since they have good chemical and physical properties such as thermal resistance. Especially, PEN shows high birefringence and good applicability, yet it is fairly expensive.

Also recently, light sources for a display have been shifted from cold cathode fluorescent lamp (CCFL) to light emitting diode (LED), which requires films with good thermal resistance and lower costs. In order to meet this demand, an alloy of polycarbonate (PC) and polyester is being used. However, the presence of additives in the alloy often impairs the transparency of the film prepared.

## SUMMARY OF THE INVENTION

Accordingly, it is an object of the present invention to provide a novel multilayered optical film with good thermal resistance, processability, transparency, and optical properties, and a method for preparing same.

In accordance with one aspect of the present invention, there is provided a multilayered optical film comprising alternating layers of a first resin layer and a second resin layer, wherein the first resin layer comprises polyethylene naphthalate (PEN), and the second resin layer comprises polyethylene terephthalate (PET) copolymerized with a heterocyclic polyalcohol.

In accordance with another aspect of the present invention, there is provided a method for preparing the multilayered optical film, comprising the steps of (a) melt-extruding a first resin comprising polyethylene naphthalate (PEN) and a second resin comprising polyethylene terephthalate (PET) copolymerized with a heterocyclic polyalcohol, followed by alternatingly laminating the extrudates; and (b) drawing the laminated layers from step (a) in at least one of the longitudinal and the transversal directions, followed by heat treatment.

The multilayered optical film of the present invention comprises a heterocyclic polyalcohol in the PET resin layer, which allows improved thermal resistance and prevents crystallization during high-temperature processing so that it is effective in reducing haze and improving compatibility with the PEN resin layer. Also, the film prepared has excellent optical properties because the PET resin layer maintains a low refractive index as well as a low birefringence after the drawing step, resulting in a high difference between the refractive indices of the PEN resin layer and the PET resin layer.

## BRIEF DESCRIPTION OF THE DRAWINGS

Fig. 1 shows a schematic view of the layer structure of the multilayered optical film according to the present invention (1: first resin layer, and 2: second resin layer).
Fig. 2 shows the changes in glass transition temperature of copolymers in accordance with the comonomer contents.
Fig. 3 shows the changes in refractive indices of copolymers in accordance with the comonomer contents.
Fig. 4 shows the changes in viscosity of copolymers in accordance with the comonomer contents.
Fig. 5 shows the transmission spectrum of the multilayered optical film obtained in Example 1.
Fig. 6 shows the transmission spectrum of the multilayered optical film obtained in Comparative Example 1.
Fig. 7 shows the transmission spectrum of the multilayered optical film obtained in Comparative Example 2.

## DETAILED DESCRIPTION OF THE INVENTION

Hereinafter, the features of the present invention are described in detail.

The multilayered optical film of the present invention comprises alternating layers of two different resin layers

having different refractive indices to reflect light of specific wavelengths (*see* Fig. 1). In order to maintain their specific refractive indices, the two resin layers should comprise different materials from each other, which can assure the maintenance of the separate layers and prevention of intermixing thereof.

The first and the second resin layers of the multilayered optical film according to the present invention preferably have a difference in refractive index of 0.2 or higher at 632.8 nm, more preferably between 0.25 and 0.35.

In the multilayered optical film of the present invention, the first resin layer is preferably positioned as the outermost layers on both sides of the film, wherein the sum of the thicknesses of both outermost layers is preferably 10% to 40% of the total thickness of the multilayered optical film.

The term "heterocyclic polyalcohol" as used in the present invention, means a polyalcohol with a heterocyclic ring containing one or more heteroatoms such as O, N, S, and P, wherein the heteroatom is preferably oxygen, nitrogen or sulfur. Further, the heterocyclic ring is preferably a 5- to 14-membered ring, because the heterocyclic polyalcohol is more stable and more readily produced with such a heterocyclic ring. Furthermore, the number of OH groups in the heterocyclic polyalcohol is preferably 2 or 3. As the heterocyclic polyalcohol has more OH groups, cross-linking is more likely to take place, which would cause troubles in the process for preparing the film, although the thermal resistance of the film prepared would be enhanced.

Examples of the heterocyclic polyalcohol are a diol comprising a single heterocyclic ring (formulae 3, 5, 6, 7, and 8), a diol with a spiro structure of two heterocyclic rings (formula 2), a diol with a bridged structure of two or more rings comprising at least one heterocyclic ring (formulae 1, 4, 9, 10, and 11), and a triol comprising one or more heterocyclic rings (formulae 12 and 13).

Specific examples of the heterocyclic polyalcohol may include isosorbide (formula 1), spiroglycol (formula 2), tetrahydrofuran diol (formula 3), Corey lactone diol (formula 4), pyrimidine-2,4-diol (formula 5), 1,2-dithiane-3,6-diol (formula 6), p-dithiane-2,5-diol (formula 7), 2-methylpyridine-3,5-diol (formula 8), furo[3,2-D]pyrimidine-2,4-diol (formula 9), 7H-pyrrolo[2,3-d]pyrimidine-2,4-diol (formula 10), 1,2,3,9-tetrahydropyrrolo[2,1-b]quinazoline-3,7-diol (formula 11), tetrahydro-2H-pyran-2,3,5-triol (formula 12), and tris(2-hydroxyethyl)isocyanurate (formula 13).

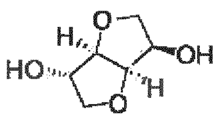

1

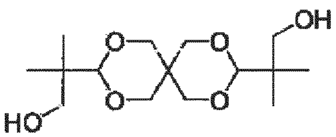

2

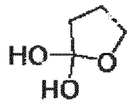

3

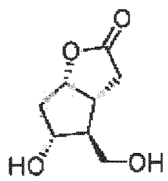

4

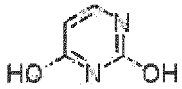

5

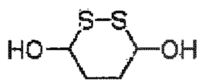

6

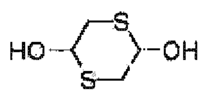

7

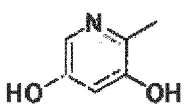

8

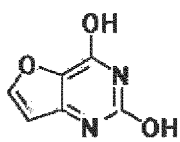

9

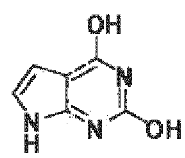

10

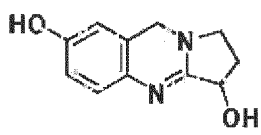

11

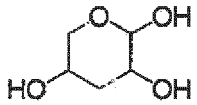

12

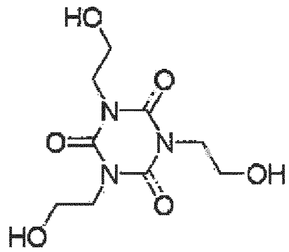

13

A ray of light incident on a laminated film produces reflected light having wavelengths of 1/2λ, 1/3λ, and so on, depending on the optical properties of the film. The wavelength of the reflected light can be adjusted to various ranges including UV light (200-400 nm), visible light (400-700 nm) and infrared light (700 nm-) by way of changing the thicknesses of the layers or the difference between the refractive indices of the layers. Further, the reflection at the second order wavelength can be controlled with the lamination ratio. In order to improve the film appearance, the lamination ratio represented by Equation 1 below is preferably between 0.01 and 0.99, more preferably between 0.50 and 0.54.

<u>Equation 1</u>

$$\text{Lamination ratio} = d1 / (d1 + d2),$$

wherein d1 and d2 represent average thicknesses of the first and the second resin layers, respectively

The lamination ratio stands for the ratio of the thickness of the first resin layer relative to the sum of the thicknesses of the first and the second layers. When the thicknesses of the first and the second resin layers are similar to each other with a lamination ratio of 0.50 to 0.54, the reflection at the second order wavelength would be reduced to about 10%, whereas the reflection at the second order wavelength would increase if the lamination ratio falls outside said range. Thus, it is desirable to control the process such that the film prepared has a lamination ratio between 0.01 to 0.99, preferably between 0.50 and 0.54, for maximizing the desired effects of the subject invention. Although the reflection at the second order wavelength is minimized, there may still be issues with respect to the reflections at the n-th order wavelengths. In any event, it is impractical to control all reflections at the n-th order wavelengths.

The average thickness of each layer contained in the multilayered optical film of the present invention is preferably between 30 nm and 300 nm for improved optical properties of the film.

The number of layers laminated to produce the multilayered optical film of the present invention is preferably between 50 and 1000, but is not limited thereto.

**First resin layer**

The first resin layer comprises, as a main component, crystalline polyester PEN. PEN may be copolymerized with a heterocyclic polyalcohol in a small amount, if desired, to improve its thermal resistance. For example, PEN copolymerized with a heterocyclic polyalcohol in an amount of 0.1 mol% to 20.0 mol% can be used, which hardly reduces its birefringence so that it can enhance the optical properties of the film due to constructive interference throughout the laminated layers.

The first resin layer preferably has a refractive index of 1.80 to 1.88 at 632.8 nm and a birefringence of 0.15 to 3.0.

**Second resin layer**

The second resin layer comprises, as a main component, amorphous PET copolymerized with a heterocyclic polyalcohol. The amount of the heterocyclic polyalcohol in the PET copolymer of the second resin layer is preferably between 10 mol% and 60 mol%. When the amount of the heterocyclic polyalcohol falls within said range, the difference between the refractive indices of the first and the second layers can be maximized, thereby improving the optical properties and thermal resistance of the film. It can also prevent any flowing during lamination, resulting in good appearance of the film.

The second resin layer preferably has a refractive index of 1.55 to 1.65 at 632.8 nm and a birefringence of 0.1 or less.

Further, the haze of the second resin layer is preferably 1.0 or less.

Hereinafter, a method of preparing the multilayered optical film of the present invention is described.

**Preparation of resin**

The first resin comprises, as a main component, crystalline polyester PEN, which can be prepared by polycondensation of naphthalate dicarboxylate and ethylene glycol.

In order to minimize such problems as poor appearance, line formation, and resin flowing during lamination of layers to produce the multilayer film, the difference between the viscosities of the first and the second resins is preferably controlled as small as possible. More preferably, the first resin has a viscosity not exceeding twice of the viscosity of the second resin. The intrinsic viscosities of the first and the second resins are preferably between 0.6 dl/g and 0.8 dl/g.

The first and the second resins may further comprise such additives as polycondensation catalysts, dispersants, antistatic agents, antiblocking agents, inorganic lubricants, and the like to the extent they do not adversely affect the properties of the film.

The first resin preferably has a refractive index of 1.80 to 1.88 at 632.8 nm and a birefringence of 0.15 to 3.0. The second resin preferably has a refractive index of 1.55 to 1.65 and a birefringence of 0.1 or less.

The second resin preferably comprises amorphous and isotropic polymers, which can maintain a low refractive index even after the extrusion and drawing steps.

The main component of the second resin, PET, is preferably copolymerized with a heterocyclic polyalcohol in an amount of 10 mol% to 60 mol%. When the amount of the heterocyclic polyalcohol falls within said range, the second resin may have a viscosity and a Tg similar to those of the first resin, which makes it possible to carry out the drawing step at temperatures where the birefringence of the first resin layer can be maximized.

**Melt-extrusion and lamination**

The first and the second resins are melt-extruded simultaneously in extruders. The melt-extrusion is preferably carried out at temperatures of 280°C or higher, more preferably between 280°C and 300°C.

The melt-extrudates of the first and the second resins are then laminated through a multilayer feedblock apparatus. It is preferable to keep the feedblock apparatus at temperatures close to those of the melt-extrusion step, more preferably at temperatures of 280 °C or higher.

The number of layers laminated may vary depending on the wavelength range, the reflectance, or the thickness of the desired film. It may range from 50 to 1000, or even more. As the number of layers laminated increases, the reflectance of light with a specific wavelength would increase. In case the layers have a thickness gradient, the wavelength range of the reflected light would be broadened. The wavelength range of the reflected light can also be changed by altering the thickness of each layer. The thicknesses of the outermost layers may also be controlled for this purpose.

Particularly, it is inevitable to adjust the ratio of flow rates by controlling the ratio of extrusion rates so as to prevent poor appearance of the film.

**Drawing**

The laminated multilayer sheet prepared through the multilayer feedblock apparatus will then undergo a drawing step in at least one of the longitudinal and the transversal directions, which gives rise to a greater difference between the refractive indices of the layers. When the laminated multilayer sheet is subjected to uniaxial drawing in either the longitudinal or the transversal direction, the optical filter finally prepared may have a dual refractive index, which partly transmits and partly reflects incident light.

When the laminated multilayer sheet is cast, it is preferable to cool it rapidly with an air knife and the like so that the first and the second resin layers do not intermix with each other and maintain their original refractive indices.

In order to optimize the optical/physical properties of PEN, it is preferable to carry out the drawing step at a temperature as low as possible. The drawing step is preferably conducted at temperatures up to the glass transition temperature (Tg) of PEN + 30 °C, more preferably up to Tg + 10 °C. For example, the drawing step may be performed at temperatures of 120 °C to 130 °C.

When the laminated multilayer sheet undergoes the drawing step, the difference between the refractive indices of the first and the second resin layers would increase to 0.2 or higher, which can prevent troubles that may otherwise occur due to crystallization of the resins during the drawing step as well as increase in the haze of the film.

The multilayered optical film of the present invention can be used for various purposes in preparing mirror films, color filters, packaging films, optical windows, etc. In particularly, as a color filter, the film can reflect light with a specific wavelength so that a desired color is presented semi-permanently. Such a color filter may be used for the purpose of interior decoration.

Hereinafter, the present invention is described more specifically by the following examples, but these are provided only for illustration purposes, and the present invention is not limited thereto.

Hereinafter, the abbreviated terms of compounds used in the present invention are defined as follows:

PET: polyethylene terephthalate;
PEN: polyethylene naphthalate;
DMT: dimethyl terephthalate;
EG: ethylene glycol;
NDC: dimethyl-2,6-naphthalene dicarboxylate;
CHDM: 1,4-cyclohexanedimethanol; and
PDO: propanediol.

**Preparation Example: Preparation of second resin**

The second resins with various compositions were prepared as described below.

**Preparation Example 1: PET copolymers (isosorbide contents: 20, 30, 45 and 60 mol%)**

A mixture of EG and isosorbide (isosorbide content: 20, 30, 45 or 60 mol%) as a polyalcohol was added in an amount of 2 to 4 moles to 1 mole of DMT as a dicarboxylic acid. A catalyst was added to the mixture, which was then subjected to a polycondensation reaction at elevated temperatures of 160-220°C at atmospheric pressure. Methanol formed as a by-product was continuously removed during the reaction, and the reaction was completed in 4 to 6 hours. The pressure was then reduced to 1 mmHg or less, while the temperature was gradually raised to 265-290 °C, in order to remove the reactants remaining unreacted from the transesterification product. After stirring was discontinued, the product was discharged from the bottom of the reactor. It was then cooled and cut to produce the copolymer product.

**Preparation Example 2: PET copolymers (spiroglycol contents: 20, 30, 45 and 60 mol%)**

PET copolymers (SPG-PET; Mitsubishi Gas Chemical Company Inc.) with spiroglycol in amounts of 20, 30, 45 and 60 mol% were employed.

**Comparative Preparation Example 1: Homo-PET (non-copolymerized)**

The procedures of Preparation Example 1 were repeated except that only EG without isosorbide was employed as a polyalcohol to prepare homo-PET.

**Comparative Preparation Example 2: PEN copolymers (NDC contents: 20, 30, 45 and 60 mol%)**

The procedures of Preparation Example 1 were repeated except that a mixture of DMT and NDC (NDC content: 20, 30,45 or 60 mol%) as a dicarboxylic acid was employed to prepare PEN copolymers.

**Comparative Preparation Example 3: PET copolymers (CHDM contents: 20, 30, 45 and 60 mol%)**

PET copolymers (PCTG, SkyGreen™; SK Chemicals Co. Ltd.) with 1,4-cyclohexanedimethanol (CHDM) in amounts of 20, 30, 45 and 60 mol% were employed.

**Comparative Preparation Example 4: PET copolymers (PDO contents: 20, 30, 45 and 60 mol%)**

The procedures of Preparation Example 1 were repeated except that a mixture of EG and PDO (PDO contents: 20, 30, 45 or 60 mol%) as a polyalcohol, was employed to prepare PET copolymers.

**Tests 1 to 3: Evaluation of properties of the second resins with various contents of comonomers**

The properties of the second resins with various contents of comonomers were evaluated as below.

**Test 1: Evaluation of glass transition temperature**

The glass transition temperature of each resin sample was measured by a differential scanning calorimeter (DSC-Q100, TA Instrument) wherein the samples were heated at a rate of temperature elevation of 10°C/min. Data obtained from the reheated samples were adopted, which are shown in Table 1 and FIG. 2.

Table 1

| Resin | Comonomer | Glass transition temperature in accordance with the comonomer content (unit: °C) | | | | |
|---|---|---|---|---|---|---|
| | | 0% | 20% | 30% | 45% | 60% |
| PET copolymer | Isosorbide | 80 | 130 | 135 | 145 | 160 |
| PET copolymer | Spiroglycol | 80 | 94 | 100 | 110 | 120 |
| PEN copolymer | NDC | 80 | 87 | 95 | 100.5 | 110 |
| PET copolymer | CHDM | 80 | 87 | 88 | 89.5 | 91 |
| PET copolymer | PDO | 80 | 79 | 76 | 71.5 | 65 |

As shown in Table 1 and FIG. 2, the glass transition temperatures is increased as the content of comonomer increases except for PET copolymerized with PDO. Particularly, the PET resins copolymerized with isosorbide or spiroglycol show rapid increases, which indicate that these resins have good thermal resistance. Further, in view of the results for the PET resins copolymerized with CHDM, it is noted that copolymers comprising heterocyclic rings are superior to polymers comprising only hydrocarbon rings in terms of thermal resistance.

**Test 2: Evaluation of refractive index**

Each resin sample was melt-extruded at 280°C, and the extrudate was cast on a cooling roll at 20°C. The sheet prepared was drawn 4 times in both the longitudinal and the transversal directions at 120°C by a biaxial drawing machine (Toyo Seiki Co., Japan) and then heat fixed at 230 °C to prepare a film having a thickness of 20 μm.
The refractive index of the film was measured in both the longitudinal and the transversal directions at 632.8 nm by an Abbe refractometer. An average value of the two measurements was calculated. The results are shown in Table 2 and FIG. 3.

Table 2

| Resin | Comonomer | Refractive indices in accordance with the comonomer content | | | | |
|---|---|---|---|---|---|---|
| | | 0% | 20% | 30% | 45% | 60% |
| PET copolymer | Isosorbide | 1.64 | 1.55 | 1.55 | 1.55 | 1.62 |
| PET copolymer | Spiroglycol | 1.64 | 1.62 | 1.55 | 1.55 | 1.62 |
| PEN copolymer | NDC | 1.64 | 1.64 | 1.63 | 1.62 | 1.75 |
| PET copolymer | CHDM | 1.64 | 1.62 | 1.60 | 1.59 | 1.62 |
| PET copolymer | PDO | 1.64 | 1.62 | 1.60 | 1.59 | 1.61 |

As shown in Table 2 and FIG. 3, most of the resin samples show minimum values of refractive indices in comonomer contents ranging from 10 to 60 mol%. Especially, the PET resins copolymerized with isosorbide or spiroglycol have relatively lower refractive indices than those of the other resin samples. Accordingly, the difference between the refractive indices of these resins and the first resin layer (PEN) will be greater, which can assure excellent optical properties of the film. It is also noted that in the resin samples comprising heterocyclic rings, crystallization is diminished around a comonomer content of 20 mol%, which means that amorphization begins to occur.

**Test 3: Evaluation of viscosity**

Each resin sample was dissolved in ortho-chlorophenol (OCP), and the intrinsic viscosity of the solution was measured at 30 °C with an Ubbelohde viscometer. The results are shown in Table 3 and FIG. 4.

Table 3

| Resin | Comonomer | Viscosity in accordance with the comonomer content (unit: dl/g) | | | | |
|---|---|---|---|---|---|---|
| | | 0% | 20% | 30% | 45% | 60% |
| PET copolymer | Isosorbide | 0.61 | 0.70 | 0.73 | 0.76 | 0.80 |
| PET copolymer | Spiroglycol | 0.61 | 0.65 | 0.67 | 0.70 | 0.70 |
| PEN copolymer | NDC | 0.61 | 0.65 | 0.67 | 0.73 | 0.75 |
| PET copolymer | CHDM | 0.61 | 0.62 | 0.63 | 0.64 | 0.65 |
| PET copolymer | PDO | 0.61 | 0.63 | 0.65 | 0.67 | 0.69 |

As shown in Table 3 and FIG. 4, the PET resin samples copolymerized with isosorbide or spiroglycol show rapid increases in their viscosity as the comonomer content increases. Accordingly, these resins are suitable for coextrusion with a resin having a high viscosity In contrast, the PET resin samples copolymerized with CHDM or PDO show slight changes in their viscosity, which means that they are not suitable for coextrusion with a resin having a high viscosity such as PEN.

**Example: Preparation of multilayered reflective films**

Hereinafter, various examples of the inventive multilayer reflective films of the present invention as well as conventional multilayer reflective films are described below.

**Example 1**

PEN (SKC Co. Ltd.) was used for the first resin, and PET copolymerized with 10 mol% of isosorbide (SK Chemicals Co. Ltd.) was used for the second resin.

The first and the second resins were separately melt-extruded in two extruders at 280°C and then fed to a multilayer feedblock apparatus to laminate the resin layers alternatingly, followed by casting the laminated layers on a cooling roll at 20°C to obtain an unoriented multilayer sheet. The lamination step was adjusted such that the thicknesses of the entire internal layers were increased in a gradient increment of 1%, the lamination ratio according to Equation 1 was between 0.01 and 0.99, and the first resin layer was disposed as the outermost layers of the laminate sheet.

The unoriented multilayer sheet was drawn 4 times in both the longitudinal and the transversal directions at 120°C by a biaxial drawing machine (Toyo Seiki Co., Japan) and then heat-set at 230°C to produce a biaxially oriented optical film with 131 layers and a total thickness of 18.7μm.

**Example 2**

The procedures of Example 1 were repeated except that a PET resin copolymerized with 40 mol% of spiroglycol (Mitsubishi Gas Chemical Company Inc.) was employed as the second resin to produce a biaxially oriented optical film with 131 layers and a total thickness of 18.7μm.

**Comparative Example 1**

The procedures of Example 1 were repeated except that a homo-PET resin (SKC Co. Ltd.) was employed as the second resin to produce a biaxially oriented optical film with 131 layers and a total thickness of 18.7μm.

**Comparative Example 2**

The procedures of Example 1 were repeated except that a PEN copolymer having a molar ratio DMT to NDC of 55:45 (coPEN5545; SKC Co. Ltd.) was employed as the second resin to produce a biaxially oriented optical film with 131 layers and a total thickness of 18.7μm.

**Comparative Example 3**

The procedures of Example 1 were repeated except that a PET resin (PCTG; SK Chemicals Co. Ltd.) copolymerized with 1,4-cyclohexanedimethanol (CHDM) in an amount of 60 mol% was employed as the second resin to

produce a biaxially oriented optical film with 131 layers and a total thickness of 18.7μm.

**Comparative Example 4**

The procedures of Example 1 were repeated except that a PET resin (SKC Co. Ltd.) copolymerized with propanediol in an amount of 40 mol% was employed as the second resin to produce a biaxially oriented optical film with 131 layers and a total thickness of 18.7μm.

**Comparative Example 5**

The procedures of Example 1 were repeated except that an alloy (Xylex 7200; SABIC Innovative Plastics Co.) of polycarbonate (PC) and polyester (PCTG) was employed as the second resin to produce a biaxially oriented optical film with 131 layers and a total thickness of 18.7μm.

**Test 4: Spectrum analysis of multilayered optical film**

Spectrum analyses of the multilayered optical films obtained from Example 1 and Comparative Examples 1 and 2 were performed by a spectrum analyzer (Ultrascan™ Pro, Hunter Lab Inc.), and the results are shown in FIGS. 5 to 7.

As shown in FIGS. 5 to 7, a broader range of spectra is observed in Example 1 as compared with Comparative Examples 1 and 2. This is attributed to a large difference in the refractive index, which increases the intensity as well as the breadth of the reflected wavelengths. It is possible to produce a reflective film having good optically properties even with fewer layers.

**Tests 5 to 7: Evaluation of respective resin layers**

The procedures of Example 1 were repeated with the same resins as those employed as the first or the second resins in Examples 1 and 2 and Comparative Examples 1 to 5, except that they were separately melt-extruded and drawn to produce respective monolayer films of the first resin and the second resin having a thickness of 20 μm.

**Test 5: Measurement of refractive index**

The refractive indices of the first and the second resin monolayer films prepared above were measured in both the longitudinal and the transversal directions at 632.8 nm by an Abbe refractometer. An average value of the two measurements was calculated, the results of which are shown in Table 4.

As shown in Table 4, it is noted that in the multilayered optical films obtained in Examples 1 and 2, the difference between the refractive indices of the first and the second resin layers has become greater through the drawing step. As a result, the optical properties of the film such as reflectance have been enhanced due to constructive interference, which is attributable to the greater difference between the refractive indices of the layers.

**Test 6: Evaluation of long-term thermal resistance (examination of fine wrinkles)**

The second resin monolayer film prepared above was exposed at 85 °C for 500 hours and then examined for fine wrinkles under 200-time magnification with a microscope. The results are shown in Table 4.

As shown in Table 4, the second resin layers of Examples 1 and 2 do not have any poor appearance problems such as fine wrinkles even after exposure to elevated temperatures for a long period of time owing to its improved thermal resistance ascribable to the copolymerization with a heterocyclic polyalcohol.

**Test 7: Evaluation of processability**

The second resin monolayer film prepared above was examined during the drawing step with respect to its processability according to the following criteria. The results are shown in Table 4:

O: no crystallization occurs, indicating good drawability; and
X: crystallization partly occurs, resulting in poor drawability.

As shown in Table 4, in the second resin layers of Examples 1 and 2, crystallization did not take place during the drawing step, showing good drawability.

Table 4

| Category | | | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|---|
| Composition | First Resin Layer | Resin | PEN | PEN | PEN | PEN | PEN | PEN | PEN |
| | Second Resin Layer | Resin | PET copolymer | PET copolymer | PET | PEN copolymer | PET copolymer | PET copolymer | PC/PCTG alloy |
| | | Co-monomer | Iso-sorbide | Spiro-glycol | - | NDC | CHDM | PDO | - |
| | | Content (mol%) | 10 | 40 | - | 45 | 60 | 40 | - |
| Evaluation | First Resin Layer | Refractive Index | 1.80 | 1.80 | 1.80 | 1.80 | 1.80 | 1.80 | 1.80 |
| | Second Resin Layer | Refractive Index | 1.55 | 1.55 | 1.64 | 1.62 | 1.59 | 1.59 | 1.56 |
| | | Fine Wrinkles | X | X | O | O | O | O | X |
| | | Process-ability | O | O | X | O | X | X | Δ |
| | | Transmittance(%) | 92 | 91 | 89 | 90 | 91 | 90 | 88 |
| | | Haze (%) | 1.0 | 0.8 | 0.8 | 1.0 | 1.0 | 1.0 | 1.1 |

As shown in above, it is noted that the multilayered optical films of Examples 1 and 2 show improved thermal resistance, drawability, and optical properties as compared with the films of Comparative Examples 1 to 4. The multilayered optical film of Comparative Example 5 show improved thermal resistance, yet it is not suitable for optical purposes due to poor drawability and high haze.

While the invention has been described with respect to the above specific embodiments, it should be recognized that various modifications and changes may be made to the invention by those skilled in the art which also fall within the scope of the invention as defined by the appended claims.

## Claims

1. A multilayered optical film comprising alternating layers of a first resin layer and a second resin layer, wherein the first resin layer comprises polyethylene naphthalate (PEN), and the second resin layer comprises polyethylene terephthalate (PET) copolymerized with a heterocyclic polyalcohol.

2. The multilayered optical film of claim 1, wherein the difference between the refractive indices of the first and the second resin layers is 0.2 or higher at 632.8 nm.

3. The multilayered optical film of claim 1, wherein the heterocyclic polyalcohol comprises a heteroatom selected from oxygen, nitrogen and sulfur.

4. The multilayered optical film of claim 1, wherein the heterocyclic polyalcohol is selected from the group consisting of isosorbide, spiroglycol, tetrahydrofuran diol, Corey lactone diol, pyrimidine-2,4-diol, 1,2-dithiane-3,6-diol, p-dithiane-2,5-diol, 2-methylpyridine-3,5-diol, furo[3,2-D]pyrimidine-2,4-diol, 7H-pyrrolo[2,3-d]pyrimidine-2,4-diol, 1,2,3,9-tetrahydropyrrolo[2,1-b]quinazoline-3,7-diol, tetrahydro-2H-pyran-2,3,5-triol, and tris(2-hydroxyethyl)isocyanurate.

5. The multilayered optical film of claim 1, wherein the PEN of the first resin layer is copolymerized with a heterocyclic polyalcohol in an amount of 0.1 mol% to 20.0 mol%.

6. The multilayered optical film of claim 1, wherein the PET of the second resin layer is copolymerized with the heterocyclic polyalcohol in an amount of 10 mol% to 60 mol%.

7. The multilayered optical film of claim 1, wherein the first resin layer is positioned as the outermost layers.

8. The multilayered optical film of claim 1, wherein each of the first and the second resin layers has an average thickness of 30 nm to 300 nm, and the lamination ratio represented by Equation 1 is between 0.01 and 0.99:

Equation 1

$$\text{Lamination ratio} = d1 / (d1 + d2),$$

wherein d1 and d2 represent average thicknesses of the first and the second resin layers, respectively.

9. The multilayered optical film of claim 1, wherein the second resin layer has a haze of 1.0 or less.

10. The multilayered optical film of claim 1 used for mirror films, color filters, packaging films or optical windows.

11. A method for preparing the multilayered optical film of claim 1, comprising the steps of:

(a) melt-extruding a first resin comprising polyethylene naphthalate (PEN) and a second resin comprising polyethylene terephthalate (PET) copolymerized with a heterocyclic polyalcohol, followed by alternatingly laminating the extrudates; and
(b) drawing the laminated layers obtained from step (a) in at least one of the longitudinal and the transversal directions, followed by heat treatment.

12. The method of claim 11, wherein the second resin has a birefringence of 0.1 or less, and the first resin has a viscosity not exceeding twice of the viscosity of the second resin.

13. The method of claim 11, wherein the melt-extrusion step is carried out at a temperature ranging from 280 °C to 300 °C, and the drawing step is carried out at a temperature ranging from 120 °C to 130 °C.

**Patentansprüche**

1. Mehrschichtiger optischer Film umfassend alternierende Schichten einer ersten Harzschicht und einer zweiten Harzschicht, wobei die erste Harzschicht Polyethylennaphthalat (PEN) umfasst und die zweite Harzschicht Polyethyleneterephthalat (PET), das mit einem heterocyclischen Polyalkohol copolymerisiert ist, umfasst.

2. Mehrschichtiger optischer Film nach Anspruch 1, wobei der Unterschied zwischen den Brechungsindizes der ersten und der zweiten Harzschicht 0,2 oder höher bei 632,8 nm ist.

3. Mehrschichtiger optischer Film nach Anspruch 1, wobei der heterocyclische Polyalkohol ein Heteroatom ausgewählt aus Sauerstoff, Stickstoff und Schwefel umfasst.

4. Mehrschichtiger optischer Film nach Anspruch 1, wobei der heterocyclische Polyalkohol ausgewählt ist aus der Gruppe bestehend aus Isosorbid, Spiroglykol, Tetrahydrofurandiol, Corey-Laktondiol, Pyrimidin-2,4-diol, 1,2-Dithian-3,6-diol, p-Dithian-2,5-diol, 2-Methylpyridin-3,5-diol, Furo-[3,2-D]-pyrimidin-2,4-diol, 7H-Pyrrolo[2,3-d]pyrimidin-2,4-diol, 1,2,3,9-Tetrahydropyrrolo[2,1-b]chinazolin-3,7-diol, Tetrahydro-2H-pyran-2,3,5-triol und Tris(2-Hydroxyethyl)isocyanurat.

5. Mehrschichtiger optischer Film nach Anspruch 1, wobei das PEN der ersten Harzschicht mit einem heterocyclischen Polyalkohol in einer Menge von 0,1 Mol% bis 20 Mol% copolymerisiert ist.

6. Mehrschichtiger optischer Film nach Anspruch 1, wobei das PET der zweiten Harzschicht mit dem heterocyclischen Polyalkohol in einer Menge von 10 Mol% bis 60 Mol% copolymerisiert ist.

7. Mehrschichtiger optischer Film nach Anspruch 1, wobei die erste Harzschicht als die äußersten Schichten positioniert ist.

8. Mehrschichtiger optischer Film nach Anspruch 1, wobei jede der ersten und der zweiten Harzschichten eine durchschnittliche Dicke von 30 nm bis 300 nm aufweist und das Laminierungsverhältnis, dargestellt durch Gleichung 1, zwischen 0,01 und 0,99 ist:

Gleichung 1

$$\text{Laminierungsverhältnis} = d1 / (d1 + d2),$$

wobei d1 und d2 durchschnittliche Dicken der ersten bzw. der zweiten Harzschichten darstellen.

9. Mehrschichtiger optischer Film nach Anspruch 1, wobei die zweite Harzschicht eine Trübung von 1,0 oder weniger aufweist.

10. Mehrschichtiger optischer Film nach Anspruch 1, verwendet für Spiegelfilme, Farbfilter, Verpackungsfilme oder optische Fenster.

11. Verfahren zum Herstellen des mehrschichtigen optischen Films nach Anspruch 1, umfassend die Schritte:

(a) Schmelzextrudieren eines ersten Harzes, umfassend Polynaphthalat (PEN), und eines zweiten Harzes, umfassend Polyethylenterephthalat (PET), das mit einem heterocyclischen Polyalkohol copolymerisiert ist, gefolgt von einem alternierenden Laminieren der Extrudate; und
(b) Strecken der laminierten Schichten, die aus Schritt (a) erhalten werden, in wenigstens einer der Längs- und der Querrichtungen, gefolgt von einer Wärmebehandlung.

12. Verfahren nach Anspruch 11, wobei das zweite Harz eine Doppelbrechung von 0,1 oder weniger aufweist und das erste Harz eine Viskosität aufweist, die das Doppelte der Viskosität des zweiten Harzes nicht übersteigt.

13. Verfahren nach Anspruch 11, wobei der Schmelzextrusionsschritt durchgeführt wird bei einer Temperatur im Bereich von 280°C bis 300°C, und wobei der Streckschritt bei einer Temperatur im Bereich von 120°C bis 130°C durchgeführt wird.

**Revendications**

1. Film optique multicouche comprenant des couches alternées d'une première couche de résine et d'une seconde couche de résine, dans lequel la première couche de résine comprend du polynaphtalate d'éthylène (PEN), et la seconde couche de résine comprend du polytéréphtalate d'éthylène) (PET) copolymérisés avec un polyalcool hétérocyclique.

2. Film optique multicouche selon la revendication 1, dans lequel la différence entre les indices de réfraction des première et seconde couches de résines est de 0,2 ou supérieur à 632,8 nm.

3. Film optique multicouche selon la revendication 1, dans lequel le polyalcool hétérocyclique comprend un hétéroatome sélectionné parmi l'oxygène, l'azote et le souffre.

4. Film optique multicouche selon la revendication 1, dans lequel le polyalcool hétérocyclique est sélectionné dans le groupe constitué d'isosorbide, de spiroglycol, de tétrahydrofurane diol, de Corey lactone diol, de pyrimidine-2,4-diol, de 1,2-dithiane-3,6-diol, de p-dithiane-2,5-diol, de 2-méthylpyridine-3,5-diol, de furo[3,2-D]pyrimidine-2,4-diol, de 7H-pyrrolo[2,3-d]pyrimidine-2,4-diol, de 1,2,3,9-tétrahydropyrrolo[2,1-b]quinazoline-3,7-diol, de tétrahydro-2H-pyran-2,3,5,-triol et de tris(2-hydroxyéthyl)isocyanurate.

**5.** Film optique multicouche selon la revendication 1, dans lequel le PEN de la première couche de résine est copolymérisé avec un polyalcool hétérocyclique en une quantité de 0,1 % en moles à 20,0 % en moles.

**6.** Film optique multicouche selon la revendication 1, dans lequel le PET de la seconde couche de résine est copolymérisé avec le polyalcool hétérocyclique en une quantité de 10 % en moles à 60 % en moles.

**7.** Film optique multicouche selon la revendication 1, dans lequel la première couche de résine est positionnée comme formant les couches les plus externes.

**8.** Film optique multicouche selon la revendication 1, dans lequel chacune des première et seconde couches de résine ont une épaisseur moyenne de 30 nm à 300 nm, et le rapport de laminage représenté par l'équation 1 se situe entre 0,01 et 0,99 :

<u>Équation 1</u>

$$\text{Rapport de laminage} = d1 / (d1 + d2),$$

dans lequel d1 et d2 représentent respectivement des épaisseurs moyennes des première et seconde couches de résine.

**9.** Film optique multicouche selon la revendication 1, dans lequel la seconde couche de résine a un facteur de voilage de 1,0 ou inférieur.

**10.** Film optique multicouche selon la revendication 1 utilisé pour des films de miroir, des filtres de couleurs, des films d'emballage ou des fenêtres optiques.

**11.** Procédé de préparation du film optique multicouche selon la revendication 1, comprenant les étapes consistant à :

(a)extruder à l'état fondu une première résine comprenant du polynaphtalate d'éthylène (PEN) et une seconde résine comprenant du polytéréphtalate d'éthylène (PET) copolymérisés avec un polyalcool hétérocyclique, puis procéder à un laminage en couches alternées des extrudats ; et
(b)étirer la couches laminées obtenues à l'étape a) dans au moins une des directions longitudinales et transversales, puis procéder à un traitement thermique.

**12.** Procédé selon la revendication 11, dans lequel la seconde résine a une biréfrigence de 0,1 ou inférieure, et la première résine a une viscosité ne dépassant pas deux fois la viscosité de la seconde résine.

**13.** Procédé selon la revendication 11, dans lequel l'étape d'extrusion en phase fondue est réalisée à une température allant de 280 °C à 300 °C et l'étape d'étirage est réalisée à une température allant de 120 °C à 130 °C.

Fig. 1

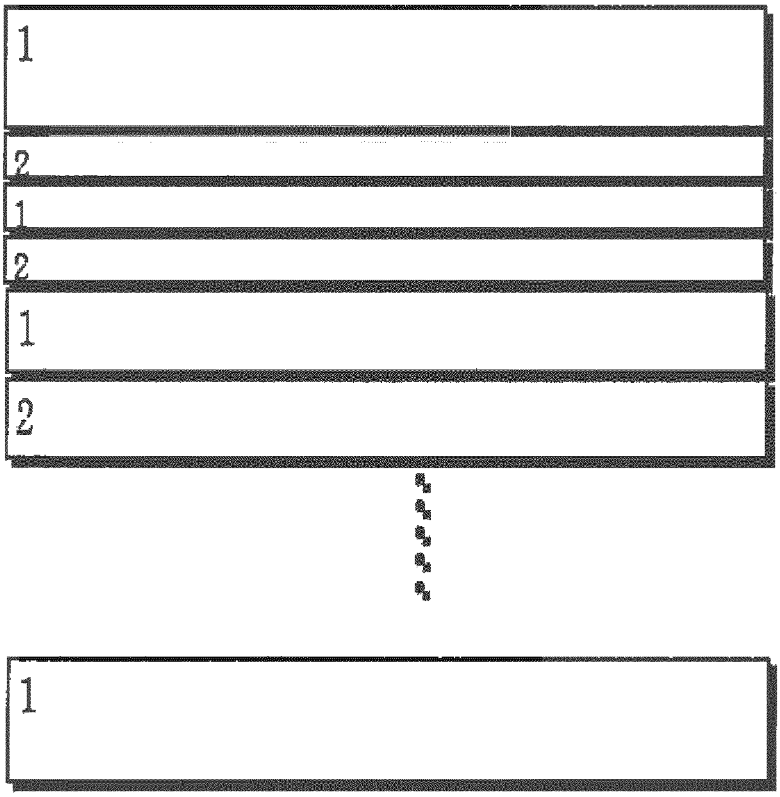

Fig. 2

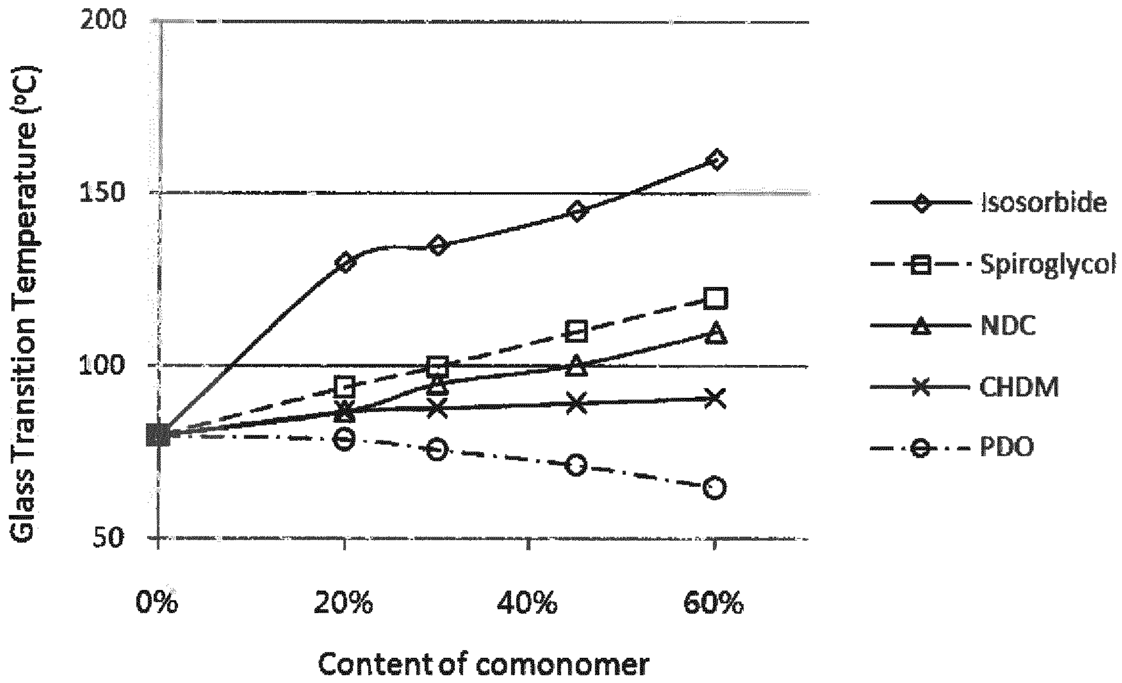
200
150
100
50
Glass Transition Temperature (ºC)
0%
20%
40%
60%
Content of comonomer
Isosorbide
Spiroglycol
NDC
CHDM
PDO

Fig. 3

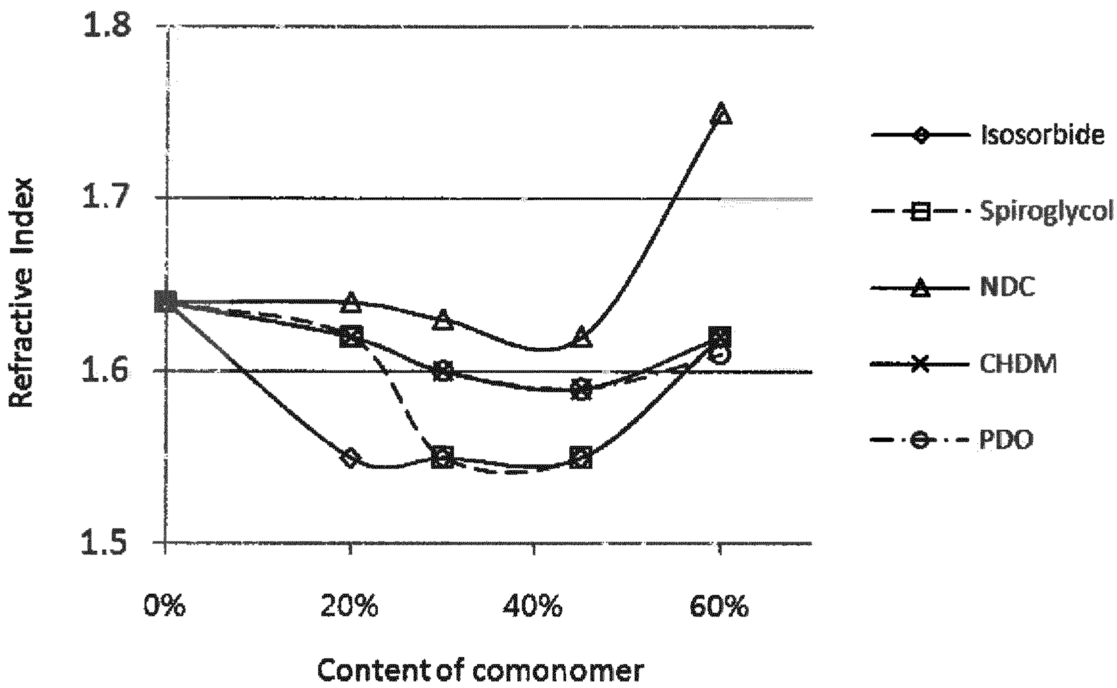
1.8
1.7
1.6
1.5
Refractive Index
0%
20%
40%
60%
Content of comonomer
Isosorbide
Spiroglycol
NDC
CHDM
PDO

**Fig. 4**

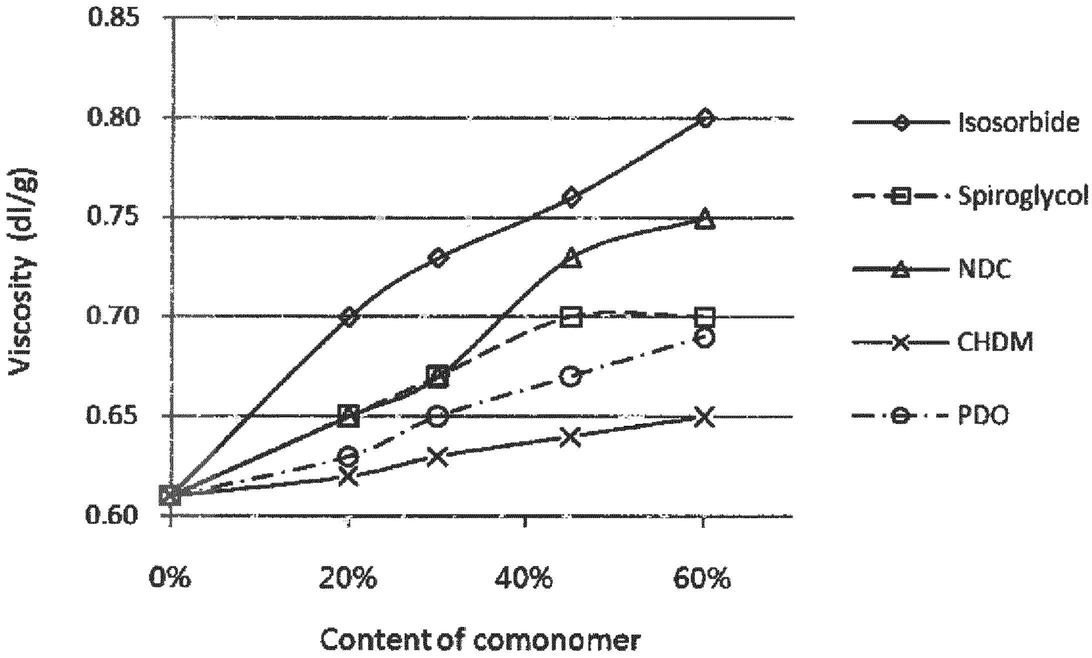
0.85
0.80
0.75
0.70
0.65
0.60
Viscosity (dl/g)
0%
20%
40%
60%
Content of comonomer
Isosorbide
Spiroglycol
NDC
CHDM
PDO

**Fig. 5**

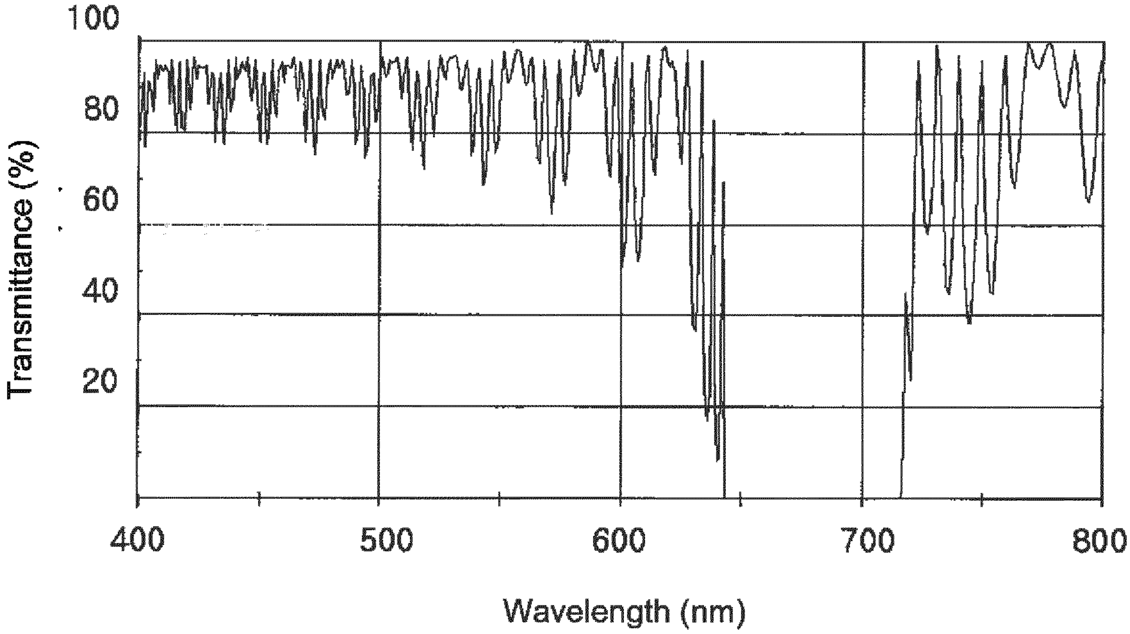
100
80
60
40
20
Transmittance (%)
400
500
600
700
800
Wavelength (nm)

Fig. 6

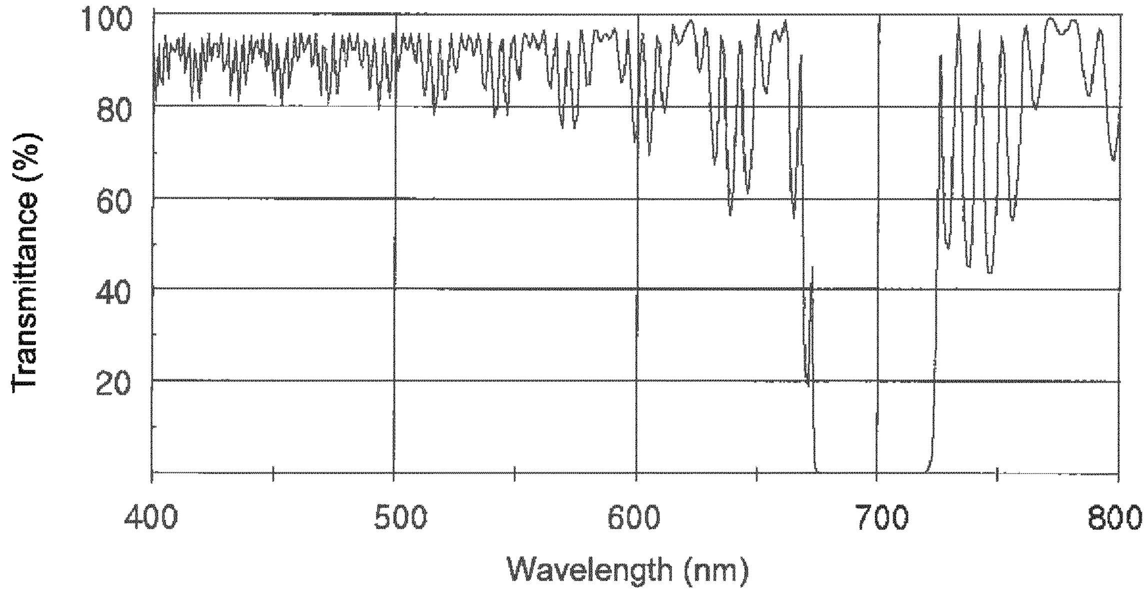
100
80
60
40
20
Transmittance (%)
400
500
600
700
800
Wavelength (nm)

Fig. 7

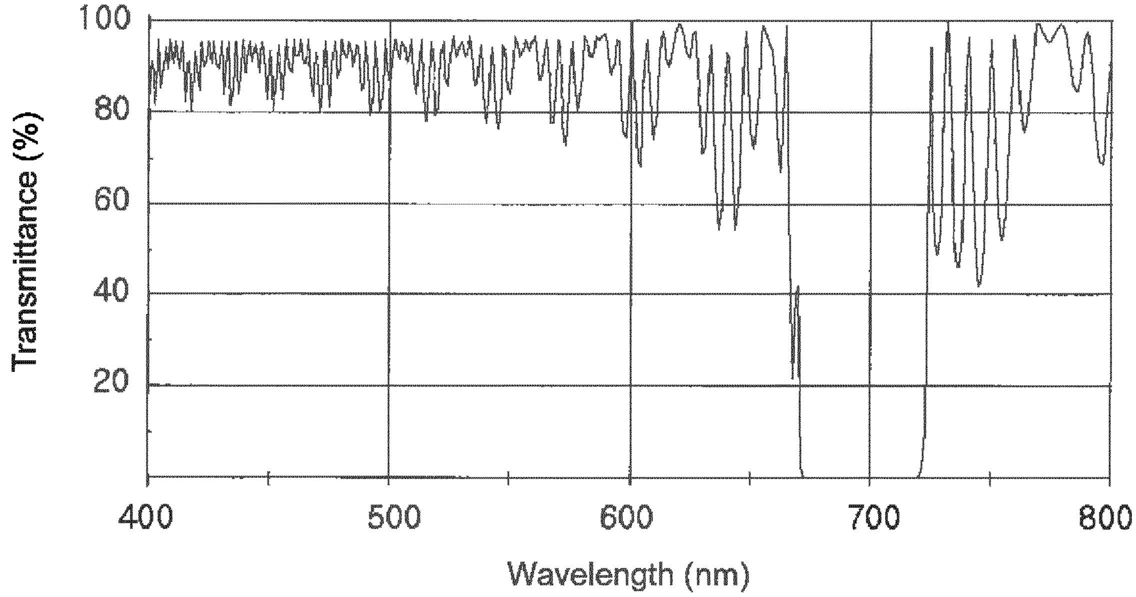
100
80
60
40
20
Transmittance (%)
400
500
600
700
800
Wavelength (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5122905 A